# EUROPEAN PATENT APPLICATION

(11) **EP 4 213 528 A1**
(43) Date of publication of application: **19.07.2023**
(21) Application number: 21863743.7
(22) Date of filing: 07.09.2021
(51) Int. Cl.: H04W 24/02

(54) **INFORMATION PROCESSING METHOD AND APPARATUS, TERMINAL DEVICE, AND NETWORK SIDE DEVICE**

(30) Priority: 07.09.2020 CN 202010927822
(71) Applicant: Datang Mobile Communications Equipment Co., Ltd., Beijing 100085 (CN)
(72) Inventor: MIAO, Jinhua, Beijing 100085 (CN); FU, Jing, Beijing 100085 (CN); LIANG, Jing, Beijing 100085 (CN)
(74) Representative: Studio Torta S.p.A.
(86) International application number: PCT/CN2021/116900
(87) International publication number: WO 2022/048681

(57) **Abstract**

This disclosure provides an information processing method and apparatus, terminal device and network side device. The information processing method includes: receiving configuration information transmitted by a network side device; determining, according to the configuration information, resource information of a target physical uplink shared channel (PUSCH); and in case that there is data to be transmitted in a radio resource control (RRC) inactive state, transmitting, according to the resource information, the data to the network side device on the corresponding PUSCH, wherein the configuration information includes corresponding information between information of a synchronization signal block (SSB) parameters and information of the PUSCH parameters.

## Description

### CROSS-REFERENCE TO RELATED APPLICATION

The present application claims a priority to the Chinese patent application No. 202010927822.X filed in China on September 7, 2020, a disclosure of which is incorporated herein by reference in its entirety.

### TECHNICAL FIELD

The present disclosure relates to the field of communications technology, in particular to an information processing method and apparatus, terminal device and network side device.

### BACKGROUND

The related art fails to specify how user equipment (UE) selects a synchronization signal and physical broadcast channel (PBCH) block (SSB) when the UE is in an inactive state and performs uplink (UL) data transmission by using configured grant (CG) resources; further, the related art fails to define how to determine CG resources for the SSB after the SSB is selected (i.e., how to select corresponding CG resources according to the selected SSB). As a result, the UE might select poor-quality resources to conduct data transmission, resulting in UE's failure of transmitting small data by using CG in the inactive state, which may also be construed as a data transmission failure caused by selecting a poor-quality physical uplink shared channel (PUSCH), since the CG resources are carried on PUSCH.

### SUMMARY

An objective of the present disclosure is to provide an information processing method and apparatus, terminal device and network side device, to solve the problem in the related art that data transmission in the inactive state is likely to fail.

In order to solve the above technical problem, an embodiment of the present disclosure provides an information processing method, performed by a first terminal device, including:
receiving configuration information transmitted by a network side device;
determining, according to the configuration information, resource information of a target PUSCH;
in case that there is data to be transmitted in a radio resource control (RRC) inactive state, transmitting, according to the resource information, the data to the network side device on the corresponding PUSCH;
wherein the configuration information includes corresponding information between information of synchronization signal block (SSB) parameters and information of physical uplink shared channel (PUSCH) parameters.

Optionally, the information processing method further includes:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides an information processing method, performed by a first terminal device, including:
receiving configuration information transmitted by a network side device, wherein the configuration information comprises corresponding information between information of synchronization signal block (SSB) parameters and information of physical uplink shared channel (PUSCH) parameters;
determining, according to the configuration information, resource information of a target PUSCH.

Optionally, the information processing method further includes: in case that there is data to be transmitted in a radio resource control (RRC) inactive state, transmitting, according to the resource information, the data to the network side device on the corresponding PUSCH.

Optionally, the information processing method further includes:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides an information processing method, performed by a network side device, including:
determining resource information of a target PUSCH, and transmitting configuration information to a first terminal device;
receiving, according to the resource information, data transmitted on a corresponding PUSCH by the first terminal device in an RRC inactive state according to the configuration information;
wherein the configuration information includes corresponding information between information of SSB parameters and information of PUSCH parameters.

Optionally, the corresponding information includes at least one of following information:
first corresponding information between SSB information and PUSCH resource information;
second corresponding information between RACH resource information and PUSCH resource information;
a time offset between SSB and PUSCH.

Optionally, the configuration information is carried in an RRC release message, an RRC recovery message, or an RRC reconfiguration message.

An embodiment of the present disclosure further provides an information processing method, performed by a second terminal device, including:
obtaining channel quality parameter information of candidate SSBs;
determining, according to the channel quality parameter information, a target SSB from at least one of the candidate SSBs;
wherein the channel quality parameter information includes at least one of following information:
   an RSRP value;
   an SINR value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, after the determining, according to the channel quality parameter information, the target SSB from at least one of the candidate SSBs, the method further includes:
determining, according to the target SSB, resource information of a target PUSCH;
transmitting, according to the resource information, data on a corresponding PUSCH to a network side device, in case that there is data to be transmitted in an RRC inactive state.

An embodiment of the present disclosure further provides a terminal device, the terminal device being a first terminal device, including a memory, a transceiver and a processor,
wherein the memory is configured to store a computer program, the transceiver is configured to transmit and receive data under control of the processor, and the processor is configured to read the computer program in the memory to implement following steps:
receiving, using the transceiver, configuration information transmitted by a network side device;
determining, according to the configuration information, resource information of a target PUSCH;
in case that there is data to be transmitted in a radio resource control (RRC) inactive state, transmitting, using the transceiver and according to the resource information, the data to the network side device on the corresponding PUSCH;
wherein the configuration information includes corresponding information between information of synchronization signal block (SSB) parameters and information of physical uplink shared channel (PUSCH) parameters.

Optionally, the steps further include:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides a terminal device, the terminal device being a first terminal device, including a memory, a transceiver and a processor,
wherein the memory is configured to store a computer program, the transceiver is configured to transmit and receive data under control of the processor, and the processor is configured to read the computer program in the memory to implement following steps:
receiving, using the transceiver, configuration information transmitted by a network side device, wherein the configuration information comprises corresponding information between information of SSB parameters and information of PUSCH parameters;
determining, according to the configuration information, resource information of a target PUSCH.

Optionally, the steps further include:
in case that there is data to be transmitted in an RRC inactive state, transmitting, using the transceiver and according to the resource information, the data to the network side device on the corresponding PUSCH.

Optionally, the steps further include:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides a network side device, including a memory, a transceiver and a processor,
wherein the memory is configured to store a computer program, the transceiver is configured to transmit and receive data under control of the processor, and the processor is configured to read the computer program in the memory to implement following steps:
determining resource information of a target PUSCH, and transmitting, using the transceiver, configuration information to a first terminal device;
receiving, using the transceiver and according to the resource information, data transmitted on a corresponding PUSCH by the first terminal device in an RRC inactive state according to the configuration information;
wherein the configuration information includes corresponding information between information of SSB parameters and information of PUSCH parameters.

Optionally, the corresponding information includes at least one of following information:
first corresponding information between SSB information and PUSCH resource information;
second corresponding information between RACH resource information and PUSCH resource information;
a time offset between SSB and PUSCH.

Optionally, the configuration information is carried in an RRC release message, an RRC recovery message, or an RRC reconfiguration message.

An embodiment of the present disclosure further provides a terminal device, the terminal device being a second terminal device, including a memory, a transceiver and a processor,
wherein the memory is configured to store a computer program, the transceiver is configured to transmit and receive data under control of the processor, and the processor is configured to read the computer program in the memory to implement following steps:
obtaining channel quality parameter information of candidate SSBs;
determining, according to the channel quality parameter information, a target SSB from at least one of the candidate SSBs;
wherein the channel quality parameter information includes at least one of following information:
   an RSRP value;
   an SINR value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the steps further include:
after the determining, according to the channel quality parameter information, the target SSB from at least one of the candidate SSBs, determining, according to the target SSB, resource information of a target PUSCH;
transmitting, using the transceiver and according to the resource information, data on a corresponding PUSCH to a network side device, in case that there is data to be transmitted in an RRC inactive state.

An embodiment of the present disclosure further provides an information processing apparatus, applied to a first terminal device, including:
a first receiving unit, configured to receive configuration information transmitted by a network side device;
a first determination unit, configured to determine, according to the configuration information, resource information of a target PUSCH;
a first transmitting unit, configured to, in case that there is data to be transmitted in a radio resource control (RRC) inactive state, transmit, according to the resource information, the data to the network side device on the corresponding PUSCH;
wherein the configuration information includes corresponding information between information of SSB parameters and information of PUSCH parameters.

Optionally, the information processing apparatus further includes:
a second determination unit, configured to determine a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between RACH resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides an information processing apparatus, applied to a first terminal device, including:
a first receiving unit, configured to receive configuration information transmitted by a network side device, wherein the configuration information includes corresponding information between information of SSB parameters and information of PUSCH parameters;
a first determination unit, configured to determine, according to the configuration information, resource information of a target PUSCH.

Optionally, the information processing apparatus further includes:
a first transmitting unit, configured to, in case that there is data to be transmitted in a radio resource control (RRC) inactive state, transmit, according to the resource information, the data to the network side device on the corresponding PUSCH.

Optionally, the information processing apparatus further includes:
a second determination unit, configured to determine a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between RACH resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

An embodiment of the present disclosure further provides an information processing apparatus, applied to a network side device, including:
a first processing unit, configured to determine resource information of a target PUSCH, and transmit configuration information to a first terminal device;
a second receiving unit, configured to receive, according to the resource information, data transmitted on a corresponding PUSCH by the first terminal device in an RRC inactive state according to the configuration information;
wherein the configuration information includes corresponding information between information of SSB parameters and information of PUSCH parameters.

Optionally, the corresponding information includes at least one of following information:
first corresponding information between SSB information and PUSCH resource information;
second corresponding information between RACH resource information and PUSCH resource information;
a time offset between SSB and PUSCH.

Optionally, the configuration information is carried in an RRC release message, an RRC recovery message, or an RRC reconfiguration message.

An embodiment of the present disclosure further provides an information processing apparatus, applied to a second terminal device, including:
a first obtaining unit, configured to obtain channel quality parameter information of candidate SSBs;
a third determination unit, configured to determine, according to the channel quality parameter information, a target SSB from at least one of the candidate SSBs;
wherein the channel quality parameter information includes at least one of following information:
   an RSRP value;
   an SINR value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the information processing apparatus further includes:
a fourth determination unit, configured to, after the determining, according to the channel quality parameter information, the target SSB from at least one of the candidate SSBs, determine, according to the target SSB, resource information of a target PUSCH;
a second transmitting unit, configured to transmit, according to the resource information, data on a corresponding PUSCH to a network side device, in case that there is data to be transmitted in an RRC inactive state.

An embodiment of the present disclosure further provides a processor readable storage medium storing a computer program,
wherein the computer program is configured to be executed by a processor to implement the foregoing information processing method on the first terminal device side; or,
the computer program is configured to be executed by a processor to implement the foregoing information processing method on the network side device side; or,
the computer program is configured to be executed by a processor to implement the foregoing information processing method on the second terminal device side.

The technical solution provided by the present disclosure has following beneficial effects.

In the foregoing solution, through receiving configuration information transmitted by a network side device; determining, according to the configuration information, resource information of a target PUSCH; in case that there is data to be transmitted in an RRC inactive state, transmitting, according to the resource information, the data to the network side device on the corresponding PUSCH; wherein the configuration information includes corresponding information between information of SSB parameters and information of PUSCH parameters, resources of better quality can be selected for data transmission, thereby avoiding as far as possible the problem that data transmission in the inactive state is likely to fail.

### BRIEF DESCRIPTION OF THE DRAWINGS

Fig. 1 is a schematic diagram of an architecture of a wireless communication system according to an embodiment of the present disclosure;
Fig. 2 is a flow diagram of an information processing method according to an embodiment of the present disclosure;
Fig. 3 is another flow diagram of an information processing method according to an embodiment of the present disclosure;
Fig. 4 is still another flow diagram of an information processing method according to an embodiment of the present disclosure;
Fig. 5 is a schematic diagram showing a PUSCH selection process in an inactive state according to an embodiment of the present disclosure;
Fig. 6 is another schematic diagram showing a PUSCH selection process in an inactive state according to an embodiment of the present disclosure;
Fig. 7 is a schematic diagram of a PUSCH resource allocation according to an embodiment of the present disclosure;
Fig. 8 is a schematic diagram showing a mapping between SSBs and PUSCHs according to an embodiment of the present disclosure;
Fig. 9 is a schematic diagram showing a mapping relationship between ROs and PUSCHs according to an embodiment of the present disclosure;
Fig. 10 is a schematic diagram showing a correspondence relationship between SSBs and ROs according to an embodiment of the present disclosure;
Fig. 11 is another schematic diagram showing a mapping between SSBs and PUSCHs according to an embodiment of the present disclosure;
Fig. 12 is a schematic structural diagram of a terminal device according to an embodiment of the present disclosure;
Fig. 13 is a schematic structural diagram of a network side device according to an embodiment of the present disclosure;
Fig. 14 is another schematic structural diagram of a terminal device according to an embodiment of the present disclosure;
Fig. 15 is a schematic structural diagram of an information processing apparatus according to an embodiment of the present disclosure;
Fig. 16 is another schematic structural diagram of an information processing apparatus according to an embodiment of the present disclosure;
Fig. 17 is still another schematic structural diagram of an information processing apparatus according to an embodiment of the present disclosure.

### DETAILED DESCRIPTION

In the following, technical solutions in embodiments of the present disclosure will be described in a clear and complete manner with reference to the drawings related to the embodiments. Obviously, the described embodiments are merely a part of, rather than all of, the embodiments of the present disclosure. Based on the embodiments of the present disclosure, a person skilled in the art may, without any creative effort, obtain other embodiments, which also fall within the scope of the present disclosure.

The term "and/or" used herein merely refers to an association relationship between objects to be associated and means there are three relationships. For example, A and/or B may represent: only A exists, both A and B exist, and only B exists. The symbol "j" as used herein generally represents there is a "or" relationship between the objects to be associated.

The term "multiple" used herein refers to two or more, and other quantifiers are similar thereto.

It is noted, the solution provided by the embodiments of the present disclosure may be applicable to multiple kinds of systems, especially a 5^{th} generation (5G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS) system, a worldwide interoperability for microwave access (WiMAX) system, a 5G New Radio (NR) system, or the like. All of the multiple kinds of systems include a terminal device and a network side device. The systems may include a core network portion as well, for example, evolved packet system (EPS), 5G system (5GS) or the like.

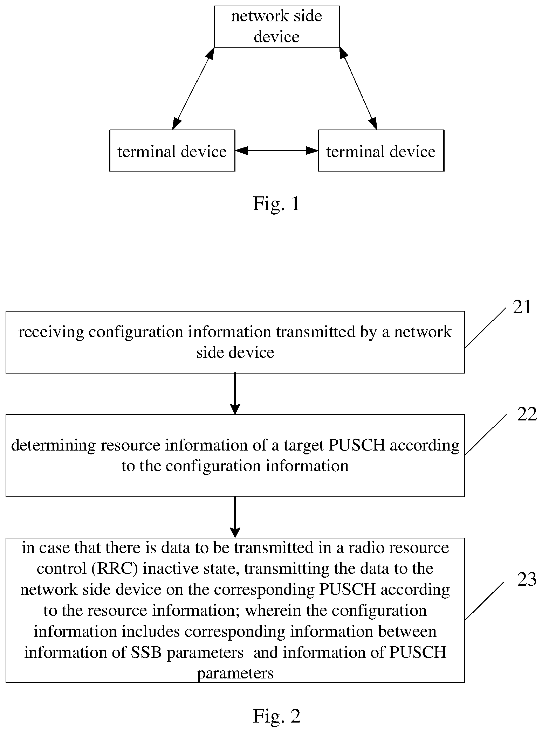

Fig. 1 shows a block diagram of a wireless communication system to which embodiments of the present disclosure are applicable. The wireless communication system includes a terminal device and a network side device.

The terminal device as referred to in the embodiments of the present disclosure may mean a device providing a user with voice and/or data connectivity, a hand-held device having a wireless connection function, other processing device connected to a wireless modem, or the like. The terminal device may have different names in different systems. For example, in the 5G system, the terminal device may be referred to as user equipment (UE). The wireless terminal device may communicate with one or more core networks (CNs) via a radio access network (RAN). The wireless terminal device may be a mobile terminal device, e.g., a mobile phone (or "cellular" phone), and a computer equipped with a mobile terminal device, for example, a portable, pocket-sized, handheld, computer built-in or in-vehicle mobile apparatus, which exchanges voice and/or data with the RAN. For example, the wireless terminal device may be a device such as a personal communication service (PCS) phone, a cordless phone, a session initiation protocol (SIP) phone, a wireless local loop (WLL) station or a personal digital assistant (PDA). The wireless terminal device may also be referred to as a system, a subscriber unit, a subscriber station, a mobile station, a mobile, a remote station, an access point, a remote terminal, an access terminal, a user terminal, a user agent, a user device, which is not limited herein.

The network side device as referred to in the embodiments of the present disclosure may be a base station, which may include multiple cells providing services to terminals. Depending on the specific application scenarios, the base station may be referred to as an access point, or may be a device in the access network that communicates with wireless terminal devices over air interface via one or more cells, or may be referred to as other names. The network side device may be used for converting received air frames into Internet protocol (IP) packets and vice versa, and serve as a router between the wireless terminal devices and other parts of the access network, where the other parts may include an IP communication network. The network side device may also coordinate the management of the attributes of the air interface. For example, the network side device as referred to in the embodiments of the present disclosure may be a base transceiver station (BTS) in the GSM or the CDMA, a NodeB in the WCDMA, an evolved Node B (eNB or e-NodeB) in LTE system, a 5G base station (gNB) in 5G network architecture (next generation system), a home evolved Node B (HeNB), a relay node, a femto, a pico, or the like, which is not limited herein. In some network architectures, the network side device may include a centralized unit (CU) and a distributed unit, which may be located geographically separated.

The network side device and the terminal device may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be two dimensional-MIMO (2D-MIMO), three dimensional-MIMO (3D-MIMO), full dimensional-MIMO (FD-MIMO) or massive-MIMO, and may be diversity transmission, precoded transmission, beam forming transmission, or the like.

Based on the above, embodiments of the present disclosure provide an information processing method and apparatus, terminal device and network side device, to solve the problem in the related art that data transmission in the inactive state is likely to fail.

The method, apparatus, terminal device and network side device are based on the same creative concept, and share similar principle to solve the problem. Therefore, for the implementation of one of the method, apparatus, terminal device and network side device, references may be made to another of the method, apparatus, terminal device and network side device. A repeated description is omitted herein.

An embodiment of the present disclosure provides an information processing method, performed by a first terminal device. As shown in Fig. 2, the method includes:
step 21: receiving configuration information transmitted by a network side device;
step 22: determining, according to the configuration information, resource information of a target PUSCH;
step 23: in case that there is data to be transmitted in a radio resource control (RRC) inactive state, transmitting, according to the resource information, the data to the network side device on the corresponding PUSCH; wherein the configuration information includes corresponding information between information of SSB parameters and information of PUSCH parameters.

The data may be small data, which refers to data having a size less than a data threshold, or data whose transmission times is less than a second threshold. The data threshold may be a data packet size and is in units of bytes or bits, or may be a quantity of data packets, e.g., a quantity of transmitted medium access control (MAC) protocol data units (PDUs), which is not limited herein.

In the information processing method provided by the embodiment of the present disclosure, through receiving configuration information transmitted by a network side device; determining, according to the configuration information, resource information of a target PUSCH; in case that there is data to be transmitted in an RRC inactive state, transmitting, according to the resource information, the data to the network side device on the corresponding PUSCH; wherein the configuration information includes corresponding information between information of SSB parameters and information of PUSCH parameters, resources of better quality can be selected for data transmission, thereby avoiding as far as possible the problem that data transmission in the inactive state is likely to fail.

Further, the information processing method includes: determining a target SSB; wherein the determining, according to the configuration information, the resource information of the target PUSCH includes: determining, according to the target SSB and the configuration information, the resource information of the target PUSCH.

As to determination of the resource information of the PUSCH, following three examples are given below.

First example, the corresponding information includes: first corresponding information between SSB information and PUSCH resource information.

The determining, according to the configuration information, the resource information of the target PUSCH includes: determining, according to SSB information of a determined target SSB and the first corresponding information, the resource information of the target PUSCH.

Second example, the corresponding information includes: second corresponding information between random access channel (RACH) resource information and PUSCH resource information.

The resource information includes one or more of time-domain information, frequency-domain information and code information.

The determining, according to the configuration information, the resource information of the target PUSCH includes: obtaining resource information of a target RACH according to location information of a determined target SSB; determining, according to the resource information of the target RACH and the second corresponding information, the resource information of the target PUSCH.

Third example, the corresponding information includes: a time offset between SSB and PUSCH.

The determining, according to the configuration information, the resource information of the target PUSCH includes: determining, according to location information of a determined target SSB and the time offset, the resource information of the target PUSCH.

Specifically, the location information of the target SSB may be a slot index i, the time offset is time slot Koffset, and the resource information of the target PUSCH is equal to a sum thereof, namely, Koffset + i.

In an embodiment of the present disclosure, the determining, according to the configuration information, the resource information of the target PUSCH includes: obtaining at least one candidate location information according to the configuration information; in case that a quantity of the at least one candidate location information is one, using the candidate location information as the resource information of the target PUSCH; in case that the quantity of the at least one candidate location information is at least two, selecting, according to service type information of a current service, the resource information of the target PUSCH from the at least two candidate location information; wherein the service type information includes at least one of data resource bearer configuration information or logical channel configuration information.

The determining the target SSB includes: obtaining channel quality parameter information of candidate SSBs; determining, according to the channel quality parameter information, the target SSB from at least one of the candidate SSBs; wherein the channel quality parameter information includes at least one of following information: a reference signal received power (RSRP) value; a signal-to-noise and interference ratio (SINR) value; a smoothed value of SSB signal sampling points within a first duration; a fluctuation value of SSB signal sampling points within a second duration.

The candidate SSBs may be pre-configured by network, or predefined.

Specifically, the target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

Further, the information processing method includes: in case that the target SSB does not exist, i.e., there is no target SSB satisfying the foregoing condition, performing any one of following steps: performing a random access procedure to conduct the data transmission; sending, to the RRC layer of the network side device, notification information that the target SSB does not exist; performing an RRC establishment procedure; performing an RRC recovery procedure; releasing the resource information of the target PUSCH.

The configuration information may be carried in an RRC release message, an RRC recovery message, or an RRC reconfiguration message.

In another optional embodiment of the present disclosure, an information processing method, performed by a first terminal device, includes:
receiving configuration information transmitted by a network side device, wherein the configuration information comprises corresponding information between information of synchronization signal block (SSB) parameters and information of physical uplink shared channel (PUSCH) parameters;
determining, according to the configuration information, resource information of a target PUSCH.

Optionally, the information processing method further includes: in case that there is data to be transmitted in a radio resource control (RRC) inactive state, transmitting, according to the resource information, the data to the network side device on the corresponding PUSCH.

Optionally, the information processing method further includes:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

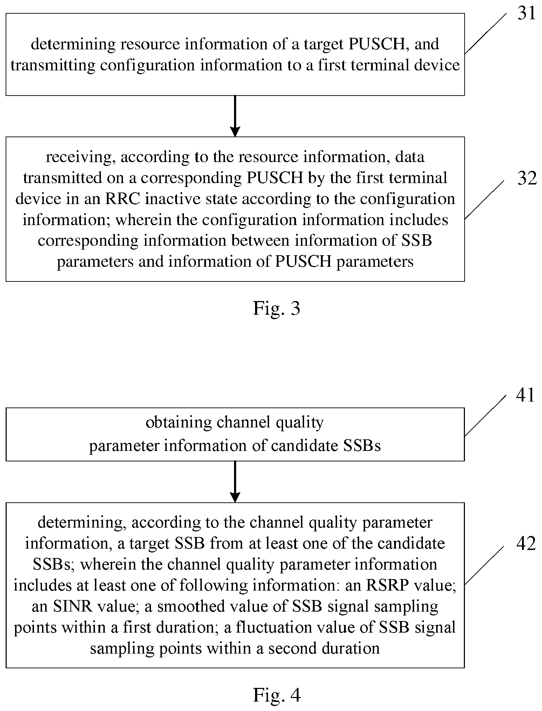

An embodiment of the present disclosure further provides an information processing method, performed by a network side device. As shown in Fig. 3, the method includes:
step 31: determining resource information of a target PUSCH, and transmitting configuration information to a first terminal device;
step 32: receiving, according to the resource information, data transmitted on a corresponding PUSCH by the first terminal device in an RRC inactive state according to the configuration information; wherein the configuration information includes corresponding information between information of SSB parameters and information of a PUSCH parameters.

The data may be small data, which refers to data having a size less than a data threshold, or data whose transmission times is less than a second threshold. The data threshold may be a data packet size and is in units of bytes or bits, or may be a quantity of data packets, e.g., a quantity of transmitted medium access control (MAC) protocol data units (PDUs), which is not limited herein.

In the information processing method provided by the embodiment of the present disclosure, through determining resource information of a target PUSCH, and transmitting configuration information to a first terminal device; receiving, according to the resource information, data transmitted on a corresponding PUSCH by the first terminal device in an RRC inactive state according to the configuration information; wherein the configuration information includes corresponding information between information of SSB parameters and information of PUSCH parameters, resources of better quality can be selected for data transmission, thereby avoiding as far as possible the problem that data transmission in the inactive state is likely to fail.

The corresponding information includes at least one of following information: first corresponding information between SSB information and PUSCH resource information; second corresponding information between RACH resource information and PUSCH resource information; a time offset between SSB and PUSCH.

The resource information includes one or more of time-domain information, frequency-domain information and code information.

In the embodiment of the present disclosure, the configuration information may be carried in an RRC release message, an RRC recovery message, or an RRC reconfiguration message.

An embodiment of the present disclosure further provides an information processing method, performed by a second terminal device. As shown in Fig. 4, the method includes:
step 41: obtaining channel quality parameter information of candidate SSBs;
step 42: determining, according to the channel quality parameter information, a target SSB from at least one of the candidate SSBs; wherein the channel quality parameter information includes at least one of following information: an RSRP value; an SINR value; a smoothed value of SSB signal sampling points within a first duration; a fluctuation value of SSB signal sampling points within a second duration.

The candidate SSBs may be pre-configured by network, or predefined.

In the information processing method provided by the embodiment of the present disclosure, through obtaining channel quality parameter information of candidate SSBs; determining, according to the channel quality parameter information, a target SSB from at least one of the candidate SSBs; wherein the channel quality parameter information includes at least one of following information: an RSRP value; an SINR value; a smoothed value of SSB signal sampling points within a first duration; a fluctuation value of SSB signal sampling points within a second duration, resources of better quality can be selected for data transmission, thereby avoiding as far as possible the problem that data transmission in the inactive state is likely to fail.

The target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

In the embodiment of the present disclosure, the information processing method further includes: in case that the target SSB does not exist, i.e., there is no target SSB satisfying the foregoing condition, performing any one of following steps: performing a random access procedure to conduct the data transmission; sending, to the RRC layer of the network side device, notification information that the target SSB does not exist; performing an RRC establishment procedure; performing an RRC recovery procedure.

Further, after the determining, according to the channel quality parameter information, the target SSB from at least one of the candidate SSBs, the method includes: determining, according to the target SSB, resource information of a target PUSCH; transmitting, according to the resource information, data on a corresponding PUSCH to a network side device, in case that there is data to be transmitted in an RRC inactive state.

The data may be small data, which refers to data having a size less than a data threshold, or data whose transmission times is less than a second threshold. The data threshold may be a data packet size and is in units of bytes or bits, or may be a quantity of data packets, e.g., a quantity of transmitted medium access control (MAC) protocol data units (PDUs), which is not limited herein.

The information processing method provided by the embodiments of the present disclosure is further described from multiple perspectives such as the terminal device and the network side device hereinafter. The terminal device is e.g., UE, the network side device may be a gNB, and the data transferred between the terminal device and the network side device is e.g., the above mentioned small data.

In view of the foregoing technical problem, an embodiment of the present disclosure provides an information processing method, which includes:
1) UE receives configuration information transmitted by a network side device, wherein the configuration information can indicate corresponding information between information of SSB parameters and information of PUSCH parameters, and the UE can obtain, according to the received configuration information, resource information of a target PUSCH;
2) according to 1), the corresponding information includes: first corresponding information between SSB information and PUSCH resource information; specifically, the configuration information includes PUSCH resource information and corresponding information sequence, and includes a correspondence relationship between SSB information and the information sequence of PUSCH resource information; the UE may obtain, according to the first corresponding information, the resource information of the target PUSCH;
3) according to 1), the corresponding information includes: second corresponding information between random access channel (RACH) resource information and PUSCH resource information; the LTE may obtain the RACH resource information according to SSB location information, and obtain the PUSCH resource information according to the RACH resource information and the second corresponding information;
4) according to 1), the corresponding information includes: a time offset between SSB and PUSCH; the UE may obtain, according to the time offset, the resource information of the target PUSCH;
5) the UE may select the target SSB according to channel quality parameter information of candidate SSBs; wherein the target SSB satisfies at least one of following conditions:
   the RSRP value of the target SSB is greater than or equal to a first RSRP threshold which is predefined or configured by a network side; and/or,
   the SINR value of the target SSB is greater than or equal to a first SINR threshold which is predefined or configured by a network side; and/or,
   the smoothed value of signal sampling points of the target SSB within the first duration is greater than or equal to a first smoothing threshold; specifically, a quantity N of signal quality sampling points are sampled within a time duration, and undergo time-domain upper smoothing, the resultant value is greater than the first smoothing threshold; for example, "time-domain upper smoothing" includes: calculating an average value of the N sampling points, etc.; wherein N is a positive integer; and/or,
   the fluctuation value of signal sampling points of the target SSB within the second duration is less than or equal to a first fluctuation threshold; specifically, the signal fluctuation of SSB within a time duration T is less than the first fluctuation threshold, e.g., a variance of the N SSB signal sampling points is less than the first fluctuation threshold, etc.; wherein T is a positive number;
   in case that the target SSB is obtained, the UE may perform small data transmission on the PUSCH corresponding to the selected target SSB;
6) in case that the UE fails to select a target SSB satisfying the condition, the UE performs at least one of following:
   the UE performs a random access procedure to conduct small data transmission; or, the UE notifies the network side device's RRC layer based on UE implementation; or, the UE performs a normal RRC establishment procedure; or, the UE performs an RRC recovery procedure; or, the UE determines that the corresponding PUSCH resource is invalid, i.e., releasing the resource information of the target PUSCH.

As for the network side device, it transmits the configuration information to the UE, and receives data on corresponding resources; for details thereof, references may be made to the above description, and a repeated description is omitted herein.

The solution provided by the embodiments of the present disclosure is described below by way of examples.

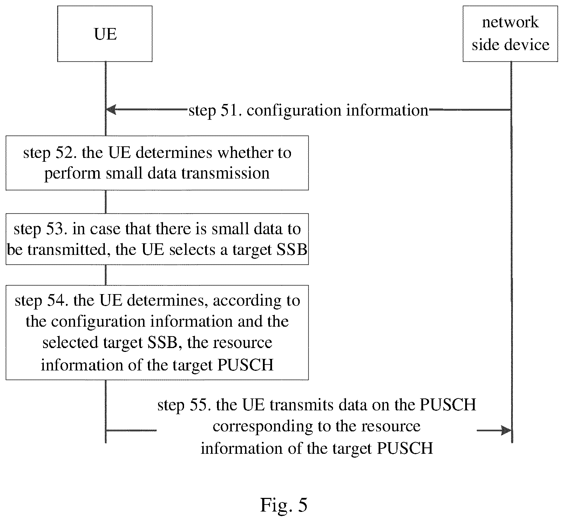

Example 1, a PUSCH selection process in the inactive state may be as shown in Fig. 5, and includes steps 51 to 55.

Step 51: the UE receives configuration information transmitted by a network side device.

The configuration information is used for indicating corresponding information between information of SSB parameters and information of PUSCH parameters. Optionally, the configuration information may be carried in an RRC release message, an RRC reconfiguration message or a broadcast message.

Optionally, the configuration information includes: PUSCH frequency-domain location information, symbol starting position information, symbol duration information, demodulation reference signal (DM-RS) configuration information, resource serial number information, and the like.

Step 52: the UE determines whether to perform small data transmission, it can also be understood as determining whether there is small data to be transmitted.

Step 53: in case that there is small data to be transmitted, the UE selects a target SSB (for specifics, refer to example 6);

Step 54: the UE determines, according to the configuration information and the selected target SSB, the resource information of the target PUSCH.

Specifically, after the UE receives the configuration information, the UE determines the resource information of the target PUSCH.

Optionally, after the UE receives the configuration information, upon entering an RRC IDLE state or an RRC inactive state, the UE determines the resource information of the target PUSCH.

Optionally, when in the RRC IDLE state or the RRC inactive state, if there is small data to be transmitted, the UE determines the resource information of the target PUSCH.

Optionally, the resource information of the target PUSCH is associated with the target SSB selected by the UE.

Step 55: the UE transmits data on the PUSCH corresponding to the resource information of the target PUSCH.

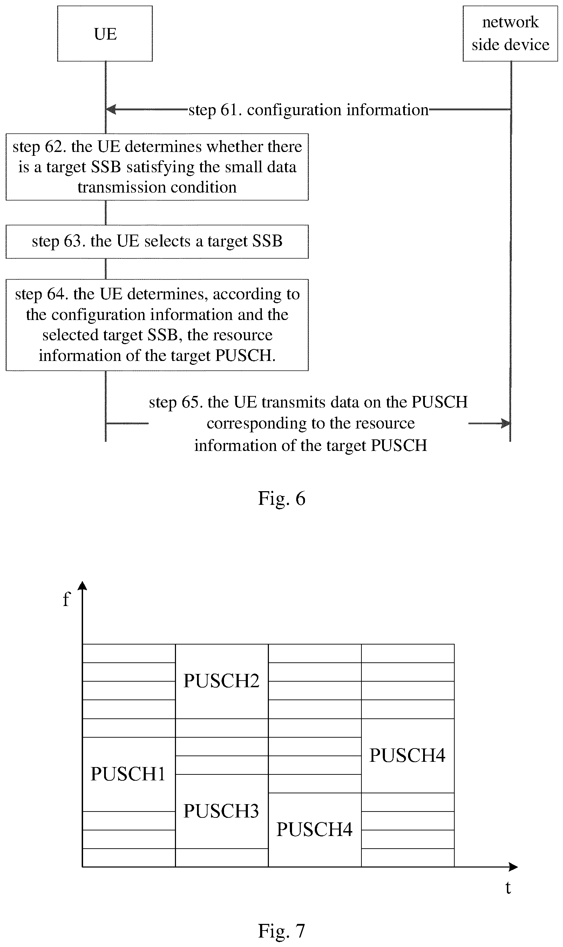

Example 2, a PUSCH selection process in the inactive state may be as shown in Fig. 6, and includes steps 61 to 65.

Step 61: the UE receives configuration information transmitted by a network side device.

The configuration information is used for indicating corresponding information between information of SSB parameters and information of PUSCH parameters. Optionally, the configuration information may be carried in an RRC release message, an RRC reconfiguration message or a broadcast message.

Optionally, the configuration information includes: PUSCH frequency-domain location information, symbol starting position information, symbol duration information, DM-RS configuration information, resource serial number information, and the like.

Step 62: the UE determines whether there is a target SSB satisfying the small data transmission condition, and if there is, proceed to step 63.

Step 63: the UE selects a target SSB (for specifics, refer to example 6).

Step 64: the UE determines, according to the configuration information and the selected target SSB, the resource information of the target PUSCH.

Specifically, after the UE receives the configuration information, if there is small data to be transmitted, the UE selects the target SSB. When there is a target SSB satisfying the small data transmission condition, the UE determines the resource information of the target PUSCH.

Optionally, after the UE receives the configuration information, upon entering an RRC IDLE state or an RRC inactive state, the UE determines the resource information of the target PUSCH.

Optionally, when in the RRC IDLE state or the RRC inactive state, if there is small data to be transmitted, the UE determines the resource information of the target PUSCH.

Optionally, the resource information of the target PUSCH is associated with the target SSB selected by the UE.

Step 65: the UE transmits data on the PUSCH corresponding to the resource information of the target PUSCH.

Example 3, the corresponding information includes: first corresponding information between SSB information and PUSCH resource information; specifically, the configuration information includes PUSCH resource information and corresponding information sequence, and includes a correspondence relationship between SSB information and the information sequence of PUSCH resource information; the LTE may obtain, according to the first corresponding information, the resource information of the target PUSCH. The process specifically includes following operation 1 to operation 4.

Operation 1: the UE receives configuration information transmitted by a network side device.

The configuration information includes configuration information of PUSCH. For example, as shown in Fig. 7 (the ordinate f denotes the frequency domain, and the abscissa t denotes the time domain), the configuration information includes PUSCH resource allocation, i.e., PUSCH resource information and corresponding information sequence: PUSCH 0 - resource information 0; PUSCH1 - resource information 1; PUSCH2 - resource information 2; ... ; PUSCHM - resource information M.

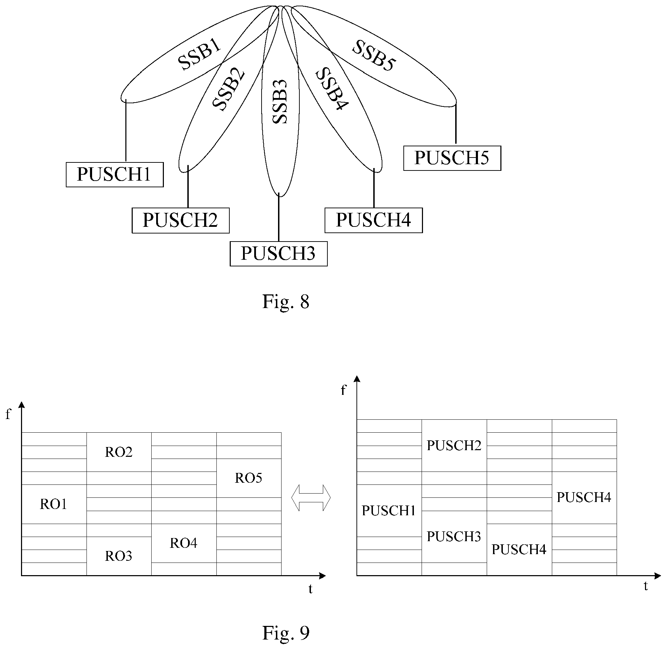

As shown in Fig. 8, the configuration information may include a correspondence relationship between SSB information and the information sequence of PUSCH resource information, i.e., a mapping relationship between SSBs and PUSCHs. The mapping relationship may specifically be a mapping relationship between SSBs and PUSCH serial numbers. The mapping relationship may be a one-to-many mapping.

For example, SSB1 corresponds to: PUSCH1, PUSCH2; SSB2 corresponds to: PUSCH2, PUSCH3.

Optionally, the mapping relationship may be a many-to-one mapping: SSB1 corresponds PUSCH1; SSB2 corresponds to PUSCH1.

Optionally, the mapping relationship may be a one-to-one mapping: SSB1 corresponds to PUSCH1; SSB2 corresponds to PUSCH2; SSB3 corresponds to PUSCH3; SSB4 corresponds to PUSCH4; SSB5 corresponds to PUSCHS.

Operation 2: the UE selects a target SSB (for specifics, refer to example 6).

Operation 3: the UE determines, according to the first corresponding information and the selected target SSB, the resource information of the target PUSCH.

For example, if the UE selects SSB1, then the UE may determine the resource information of the target PUSCH according to the mapping relationship described with respect to the operation 1.

If there is a one-to-many mapping between SSBs and PUSCHs, the SSB 1 selected by the UE may correspond to PUSCH1 and PUSCH2. In this case, one of PUSCH1 and PUSCH2 may be further selected based on service type. For example, assuming the PUSCH1 corresponds to a longer slot, while the PUSCH2 corresponds to a shorter slot, if the service currently triggered by the UE has strict requirements on latency, then the UE may select the PUSCH2, so as to transmit data in shorter slots.

If there is a many-to-one mapping or one-to-one mapping between SSBs and PUSCHs, the UE may select a corresponding PUSCH according to the selected target SSB and the mapping relationship.

Operation 4: the UE transmits data on the PUSCH corresponding to the resource information of the target PUSCH.

Example 4, the configuration information includes the second corresponding information between PUSCH resource information and RACH resource information, the UE may obtain the RACH resource information according to the SSB location information, and obtain the PUSCH resource information according to the second corresponding information and the RACH resource information. The process specifically includes following operation 1 to operation 4.

Operation 1: the UE receives configuration information transmitted by a network side device.

The configuration information includes configuration information of PUSCH. For example, the configuration information includes PUSCH resource allocation, i.e., PUSCH resource information and corresponding information sequence: PUSCH 0 - resource information 0; PUSCH1 - resource information 1; PUSCH2 - resource information 2; ... ; PUSCHM - resource information M.

As shown in Fig. 9, the configuration information may include the second corresponding information, which may be a mapping relationship between random access occasions (ROs) and PUSCHs. Specifically, the mapping may be a mapping relationship between ROs and PUSCH serial numbers. For example:
RO1 corresponds to PUSCH1;
RO2 corresponds to PUSCH2;
RO3 corresponds to PUSCH3; ...;
ROn corresponds to PUSCHn.

Operation 2: the UE selects a target SSB (for specifics, refer to example 6).

Operation 3: the UE determines, according to the selected target SSB, the resource information of the target PUSCH.

For example, if the UE selects the SSB1, then UE selects RO1 according to SSB1 and further selects PUSCH1 according to RO I.

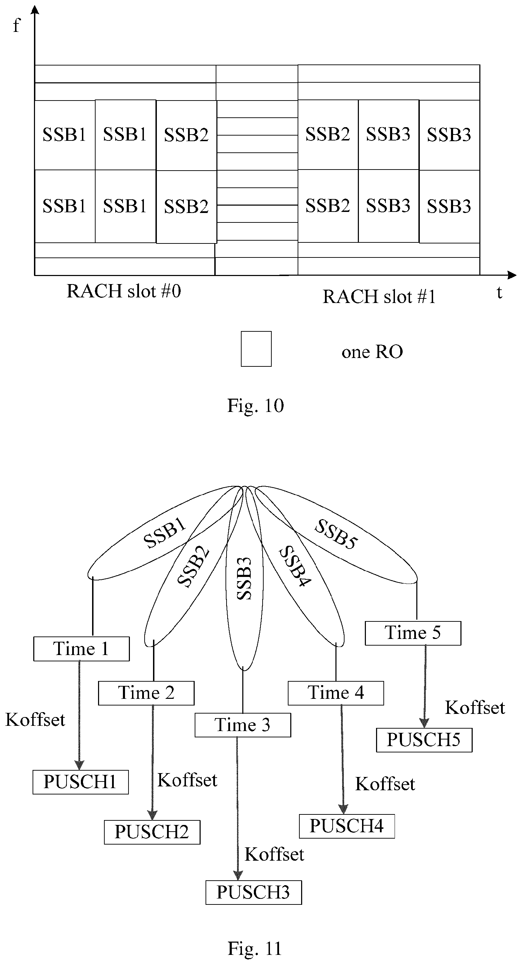

The process in which the UE selects an RO according to the SSB is as follows:
a correspondence relationship between SSBs and ROs is configured via RRC (as shown in Fig. 10), specifically, a random access configuration may include a sequence of SSBs and each RACH occasion (RO). The order in which the SSB indicates RO is: ROs are initially sorted in the frequency domain, then in the time domain within one slot, and finally, in different slots.

Operation 4: the UE transmits data on the PUSCH corresponding to the resource information of the target PUSCH.

Example 5, the configuration information includes time domain offset information between PUSCH and SSB, i.e., the foregoing time offset. The UE may obtain the resource information of the target PUSCH according to the time domain offset information. The process specifically includes following operation 1 to operation 3.

Operation 1: the UE receives configuration information transmitted by a network side device.

The configuration information includes time domain offset information between PUSCH and SSB, e.g., the time domain offset information is slot Koffset, referring to Fig. 11.

Operation 2: the UE selects a target SSB (for specifics, refer to example 6).

Operation 3: the UE determines, according to the time domain offset information and the selected target SSB, the resource information of the target PUSCH.

For example, if the UE selects the SSB 1, then the resource information of the target PUSCH may be obtained according to the slot Koffset. For example, if the selected SSB has a slot index of i, then the PUSCH time domain location for data transmission is Koffset + i.

Example 6, that "UE selects a target SSB" described in examples 1 to 5 may specifically include the following operation 1.

Operation 1: if the UE satisfies the condition for transmitting small data in the inactive or Idle state, the UE selects a target SSB. The operation specifically includes: the UE measures channel quality parameter information of candidate SSBs, and obtains, from the candidate SSBs, the SSB satisfying at least one of following conditions:
the RSRP value of the SSB is greater than or equal to a first RSRP threshold which is predefined or configured by a network side; and/or,
the SINR value of the SSB is greater than or equal to a first SINR threshold which is predefined or configured by a network side; and/or,
the smoothed value of signal sampling points of the SSB within the first duration is greater than or equal to a first smoothing threshold; specifically, a quantity N of signal quality sampling points are sampled within a time duration, and undergo time-domain upper smoothing, the resultant value is greater than the first smoothing threshold; for example, "time-domain upper smoothing" includes: calculating an average value of the N sampling points, etc.; wherein N is a positive integer; and/or,
the fluctuation value of signal sampling points of the SSB within the second duration is less than or equal to a first fluctuation threshold; specifically, the signal fluctuation of SSB within a time duration T is less than the first fluctuation threshold, e.g., a variance of the N SSB signal sampling points is less than the first fluctuation threshold, etc.; wherein T is a positive number.

When there are multiple SSBs satisfying the conditions, the UE may determine the target SSB in the following manner: selecting an SSB of best signal quality, e.g., an SSB with the highest RSRP value; or selecting an SSB with the highest SINR value; or randomly selecting one SSB.

When there is no SSB satisfying the conditions, that is, the UE fails to select a target SSB satisfying the condition, the UE performs at least one of following:
the UE performs a random access procedure to conduct small data transmission; or,
the UE notifies the network side device's RRC layer, based on UE implementation; or,
the LTE performs a normal RRC establishment procedure; or,
the LTE performs an RRC recovery procedure; or,
the UE determines that the corresponding PUSCH resource is invalid, i.e., releasing the resource information of the target PUSCH.

As can be known from the above, the solution provided by the embodiments of the present disclosure solves the problem of how to select, according to the selected SSB, a PUSCH to transmit small data in the inactive state.

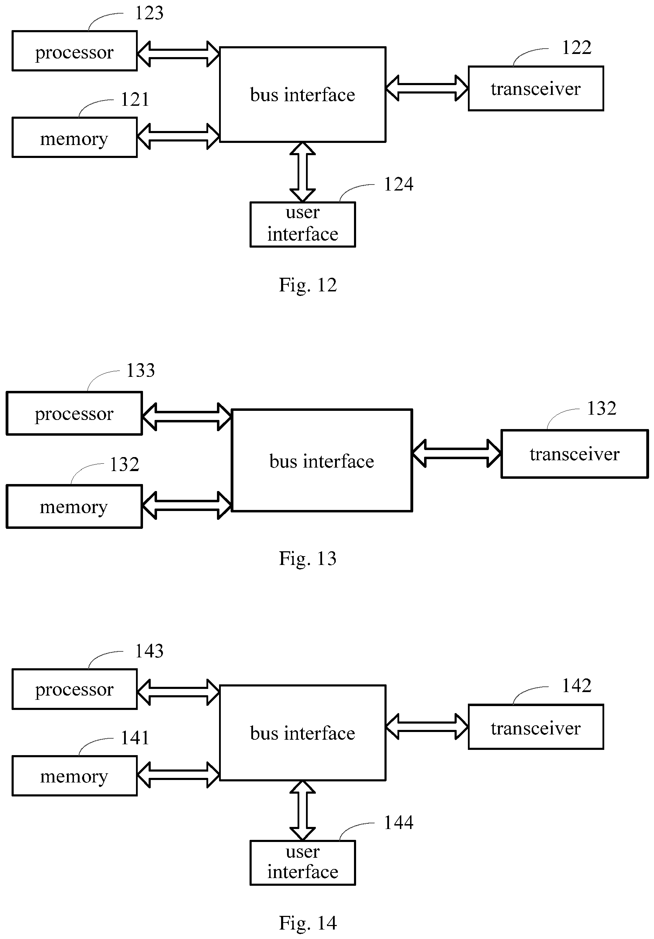

An embodiment of the present disclosure further provides a terminal device, the terminal device being a first terminal device. As shown in Fig. 12, the terminal device includes a memory 121, a transceiver 122 and a processor 123,
wherein the memory 121 is configured to store a computer program, the transceiver 122 is configured to transmit and receive data under control of the processor 123, and the processor 123 is configured to read the computer program in the memory 121 to implement following steps:
receiving, using the transceiver 122, configuration information transmitted by a network side device;
determining, according to the configuration information, resource information of a target PUSCH;
in case that there is data to be transmitted in a radio resource control (RRC) inactive state, transmitting, using the transceiver 122 and according to the resource information, the data to the network side device on the corresponding PUSCH;
wherein the configuration information includes corresponding information between information of SSB parameters and information of PUSCH parameters.

In the terminal device provided by the embodiment of the present disclosure, through receiving configuration information transmitted by a network side device; determining, according to the configuration information, resource information of a target PUSCH; in case that there is data to be transmitted in an RRC inactive state, transmitting, according to the resource information, the data to the network side device on the corresponding PUSCH; wherein the configuration information includes corresponding information between information of SSB parameters and information of PUSCH parameters, resources of better quality can be selected for data transmission, thereby avoiding as far as possible the problem that data transmission in the inactive state is likely to fail.

Specifically, the transceiver 122 is configured to receive and transmit data under the control of the processor 123.

In Fig. 12, a bus architecture may include any number of interconnected buses and bridges, and connects various circuits including one or more processors represented by the processor 123 and memory represented by the memory 121. The bus architecture may also connect various other circuits such as peripherals, voltage regulators and power management circuits, which is well known in the art. Therefore, a detailed description thereof is omitted herein. A bus interface provides an interface. The transceiver 122 may be multiple elements, such as a transmitter and a receiver, to allow for communication with various other apparatuses on the transmission medium. The transmission medium includes a wireless channel, a wired channel, a fiber optic or the like. For different user equipment, the user interface 124 may be an interface capable of externally or internally connecting a required device, and the connected device includes, but is not limited to: a keypad, a display, a speaker, a microphone, a joystick and the like.

The processor 123 is responsible for supervising the bus architecture and normal operation, and the memory 121 may store the data being used by the processor 123 during operation.

Optionally, the processor 123 may be a central processing unit (CPU), an application specific integrated circuit (ASIC), a field-programmable gate array (FPGA) or a complex programmable logic device (CPLD). The processor may also adopt a multi-core structure.

The processor is configured to implement, according to the executable instruction obtained from calling the computer program stored in the memory, any one method provided by the embodiments of the present disclosure. The processor and the memory may be arranged physically separated from each other.

Further, the operation includes: determining a target SSB; wherein the determining, according to the configuration information, the resource information of the target PUSCH includes: determining, according to the target SSB and the configuration information, the resource information of the target PUSCH.

As to determination of the resource information of the PUSCH, following three examples are given below.

First example, the corresponding information includes: first corresponding information between SSB information and PUSCH resource information.

The determining, according to the configuration information, the resource information of the target PUSCH includes: determining, according to SSB information of a determined target SSB and the first corresponding information, the resource information of the target PUSCH.

Second example, the corresponding information includes: second corresponding information between random access channel (RACH) resource information and PUSCH resource information.

The determining, according to the configuration information, the resource information of the target PUSCH includes: obtaining resource information of a target RACH according to location information of a determined target SSB; determining, according to the resource information of the target RACH and the second corresponding information, the resource information of the target PUSCH.

Third example, the corresponding information includes: a time offset between SSB and PUSCH.

The determining, according to the configuration information, the resource information of the target PUSCH includes: determining, according to location information of a determined target SSB and the time offset, the resource information of the target PUSCH.

In an embodiment of the present disclosure, the determining, according to the configuration information, the resource information of the target PUSCH includes: obtaining at least one candidate location information according to the configuration information; in case that a quantity of the at least one candidate location information is one, using the candidate location information as the resource information of the target PUSCH; in case that the quantity of the at least one candidate location information is at least two, selecting, according to service type information of a current service, the resource information of the target PUSCH from the at least two candidate location information; wherein the service type information includes at least one of data resource bearer configuration information or logical channel configuration information.

The determining the target SSB includes: obtaining channel quality parameter information of candidate SSBs; determining, according to the channel quality parameter information, the target SSB from at least one of the candidate SSBs; wherein the channel quality parameter information includes at least one of following information: a reference signal received power (RSRP) value; a signal-to-noise and interference ratio (SINR) value; a smoothed value of SSB signal sampling points within a first duration; a fluctuation value of SSB signal sampling points within a second duration.

Specifically, the target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

The configuration information may be carried in an RRC release message, an RRC recovery message, or an RRC reconfiguration message.

Another optional embodiment of the present disclosure provides a terminal device, the terminal device being a first terminal device, including a memory, a transceiver and a processor,
wherein the memory is configured to store a computer program, the transceiver is configured to transmit and receive data under control of the processor, and the processor is configured to read the computer program in the memory to implement following steps:
receiving, using the transceiver, configuration information transmitted by a network side device, wherein the configuration information comprises corresponding information between information of SSB parameters and information of PUSCH parameters;
determining, according to the configuration information, resource information of a target PUSCH.

Optionally, the steps further include:
in case that there is data to be transmitted in an RRC inactive state, transmitting, using the transceiver and according to the resource information, the data to the network side device on the corresponding PUSCH.

Optionally, the steps further include:
determining a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between random access channel (RACH) resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

It is noted, the terminal device provided by the embodiment of the present disclosure may implement all method steps of the aforementioned method embodiments on the first terminal device side, and may achieve the same technical effects. To avoid redundancy, a detailed description of those parts same as the method embodiments and beneficial effects is omitted herein.

An embodiment of the present disclosure further provides a network side device. As shown in Fig. 13, the network side device includes a memory 131, a transceiver 132 and a processor 133,
wherein the memory 131 is configured to store a computer program, the transceiver 132 is configured to transmit and receive data under control of the processor, and the processor 133 is configured to read the computer program in the memory 131 to implement following steps:
determining resource information of a target PUSCH, and transmitting, using the transceiver 132, configuration information to a first terminal device;
receiving, using the transceiver 132 and according to the resource information, data transmitted on a corresponding PUSCH by the first terminal device in an RRC inactive state according to the configuration information;
wherein the configuration information includes corresponding information between information of SSB parameters and information of PUSCH parameters.

In the network side device provided by the embodiment of the present disclosure, through determining resource information of a target PUSCH, and transmitting configuration information to a first terminal device; receiving, according to the resource information, data transmitted on a corresponding PUSCH by the first terminal device in an RRC inactive state according to the configuration information; wherein the configuration information includes corresponding information between information of SSB parameters and information of PUSCH parameters, resources of better quality can be selected for data transmission, thereby avoiding as far as possible the problem that data transmission in the inactive state is likely to fail.

Specifically, the transceiver 132 is configured to receive and transmit data under the control of the processor 133.

In Fig. 13, a bus architecture may include any number of interconnected buses and bridges, and connects various circuits including one or more processors represented by the processor 133 and memory represented by the memory 131. The bus architecture may also connect various other circuits such as peripherals, voltage regulators and power management circuits, which is well known in the art. Therefore, a detailed description thereof is omitted herein. A bus interface provides an interface. The transceiver 132 may be multiple elements, such as a transmitter and a receiver, to allow for communication with various other apparatuses on the transmission medium. The transmission medium includes a wireless channel, a wired channel, a fiber optic or the like. The processor 133 is responsible for supervising the bus architecture and normal operation, and the memory 131 may store the data being used by the processor 133 during operation.

The processor 133 may be a central processing unit (CPU), an application specific integrated circuit (ASIC), a field-programmable gate array (FPGA) or a complex programmable logic device (CPLD). The processor may also adopt a multi-core structure.

The corresponding information includes at least one of following information: first corresponding information between SSB information and PUSCH resource information; second corresponding information between RACH resource information and PUSCH resource information; a time offset between SSB and PUSCH.

In the embodiment of the present disclosure, the configuration information may be carried in an RRC release message, an RRC recovery message, or an RRC reconfiguration message.

It is noted, the network side device provided by the embodiment of the present disclosure may implement all method steps of the aforementioned method embodiments on the network side device side, and may achieve the same technical effects. To avoid redundancy, a detailed description of those parts same as the method embodiments and beneficial effects is omitted herein.

An embodiment of the present disclosure further provides a terminal device, the terminal device being a second terminal device. As shown in Fig. 14, the terminal device includes a memory 141, a transceiver 142 and a processor 143,
wherein the memory 141 is configured to store a computer program, the transceiver 142 is configured to transmit and receive data under control of the processor 143, and the processor 143 is configured to read the computer program in the memory 141 to implement following steps:
obtaining channel quality parameter information of candidate SSBs;
determining, according to the channel quality parameter information, a target SSB from at least one of the candidate SSBs;
wherein the channel quality parameter information includes at least one of following information:
   an RSRP value;
   an SINR value;
   a smoothed value of SSB signal sampling points within a first duration;
   a fluctuation value of SSB signal sampling points within a second duration.

In the terminal device provided by the embodiment of the present disclosure, through obtaining channel quality parameter information of candidate SSBs; determining, according to the channel quality parameter information, a target SSB from at least one of the candidate SSBs; wherein the channel quality parameter information includes at least one of following information: an RSRP value; an SINR value; a smoothed value of SSB signal sampling points within a first duration; a fluctuation value of SSB signal sampling points within a second duration, resources of better quality can be selected for data transmission, thereby avoiding as far as possible the problem that data transmission in the inactive state is likely to fail.

Specifically, the transceiver 142 is configured to receive and transmit data under the control of the processor 143.

In Fig. 14, a bus architecture may include any number of interconnected buses and bridges, and connects various circuits including one or more processors represented by the processor 143 and memory represented by the memory 141. The bus architecture may also connect various other circuits such as peripherals, voltage regulators and power management circuits, which is well known in the art. Therefore, a detailed description thereof is omitted herein. A bus interface provides an interface. The transceiver 142 may be multiple elements, such as a transmitter and a receiver, to allow for communication with various other apparatuses on the transmission medium. The transmission medium includes a wireless channel, a wired channel, a fiber optic or the like. For different user equipment, the user interface 144 may be an interface capable of externally or internally connecting a required device, and the connected device includes, but is not limited to: a keypad, a display, a speaker, a microphone, a joystick and the like.

The processor 143 is responsible for supervising the bus architecture and normal operation, and the memory 141 may store the data being used by the processor 143 during operation.

Optionally, the processor 143 may be a CPU, an ASIC, an FPGA or a CPLD. The processor may also adopt a multi-core structure.

The processor is configured to implement, according to the executable instruction obtained from calling the computer program stored in the memory, any one method provided by the embodiments of the present disclosure. The processor and the memory may be arranged physically separated from each other.

The target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

Further, the operation includes: after the determining, according to the channel quality parameter information, the target SSB from at least one of the candidate SSBs, determining, according to the target SSB, resource information of a target PUSCH; transmitting, according to the resource information, data on a corresponding PUSCH to a network side device, in case that there is data to be transmitted in an RRC inactive state.

It is noted, the terminal device provided by the embodiment of the present disclosure may implement all method steps of the aforementioned method embodiments on the second terminal device side, and may achieve the same technical effects. To avoid redundancy, a detailed description of those parts same as the method embodiments and beneficial effects is omitted herein.

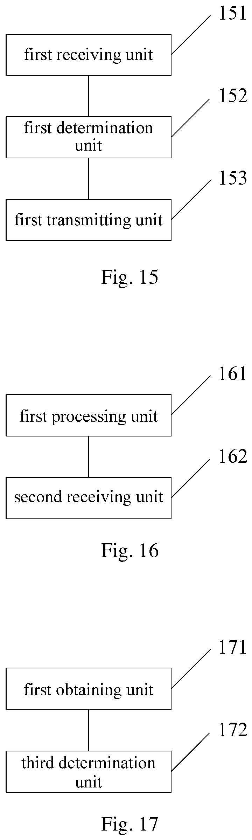

An embodiment of the present disclosure further provides an information processing apparatus, applied to a first terminal device. As shown in Fig. 15, the information processing apparatus includes:
a first receiving unit 151, configured to receive configuration information transmitted by a network side device;
a first determination unit 152, configured to determine, according to the configuration information, resource information of a target PUSCH;
a first transmitting unit 153, configured to, in case that there is data to be transmitted in a radio resource control (RRC) inactive state, transmit, according to the resource information, the data to the network side device on the corresponding PUSCH;
wherein the configuration information includes corresponding information between information of SSB parameters and information of PUSCH parameters.

In the information processing apparatus provided by the embodiment of the present disclosure, through receiving configuration information transmitted by a network side device; determining, according to the configuration information, resource information of a target PUSCH; in case that there is data to be transmitted in an RRC inactive state, transmitting, according to the resource information, the data to the network side device on the corresponding PUSCH; wherein the configuration information includes corresponding information between information of SSB parameters and information of PUSCH parameters, resources of better quality can be selected for data transmission, thereby avoiding as far as possible the problem that data transmission in the inactive state is likely to fail.

The information processing apparatus further includes:
a second determination unit, configured to determine a target SSB;
wherein the determining, according to the configuration information, the resource information of the target PUSCH includes:
   determining, according to the target SSB and the configuration information, the resource information of the target PUSCH.

As to determination of the resource information of the PUSCH, following three examples are given below.

First example, the corresponding information includes: first corresponding information between SSB information and PUSCH resource information.

The determining, according to the configuration information, the resource information of the target PUSCH includes: determining, according to SSB information of a determined target SSB and the first corresponding information, the resource information of the target PUSCH.

Second example, the corresponding information includes: second corresponding information between random access channel (RACH) resource information and PUSCH resource information.

The determining, according to the configuration information, the resource information of the target PUSCH includes: obtaining resource information of a target RACH according to location information of a determined target SSB; determining, according to the resource information of the target RACH and the second corresponding information, the resource information of the target PUSCH.

Third example, the corresponding information includes: a time offset between SSB and PUSCH.

The determining, according to the configuration information, the resource information of the target PUSCH includes: determining, according to location information of a determined target SSB and the time offset, the resource information of the target PUSCH.

In an embodiment of the present disclosure, the determining, according to the configuration information, the resource information of the target PUSCH includes: obtaining at least one candidate location information according to the configuration information; in case that a quantity of the at least one candidate location information is one, using the candidate location information as the resource information of the target PUSCH; in case that the quantity of the at least one candidate location information is at least two, selecting, according to service type information of a current service, the resource information of the target PUSCH from the at least two candidate location information; wherein the service type information includes at least one of data resource bearer configuration information or logical channel configuration information.

The determining the target SSB includes: obtaining channel quality parameter information of candidate SSBs; determining, according to the channel quality parameter information, the target SSB from at least one of the candidate SSBs; wherein the channel quality parameter information includes at least one of following information: a reference signal received power (RSRP) value; a signal-to-noise and interference ratio (SINR) value; a smoothed value of SSB signal sampling points within a first duration; a fluctuation value of SSB signal sampling points within a second duration.

Specifically, the target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

The configuration information may be carried in an RRC release message, an RRC recovery message, or an RRC reconfiguration message.

Another optional embodiment of the present disclosure further provides an information processing apparatus, applied to a first terminal device, including:
a first receiving unit, configured to receive configuration information transmitted by a network side device, wherein the configuration information includes corresponding information between information of SSB parameters and information of PUSCH parameters;
a first determination unit, configured to determine, according to the configuration information, resource information of a target PUSCH.

Optionally, the information processing apparatus further includes:
a first transmitting unit, configured to, in case that there is data to be transmitted in a radio resource control (RRC) inactive state, transmit, according to the resource information, the data to the network side device on the corresponding PUSCH.

Optionally, the information processing apparatus further includes:
a second determination unit, configured to determine a target SSB;
wherein the determining, according to the configuration information, the resource information of the target PUSCH includes:
   determining, according to the target SSB and the configuration information, the resource information of the target PUSCH.

Optionally, the corresponding information includes:
first corresponding information between SSB information and PUSCH resource information.

Optionally, the determining, according to the configuration information, the resource information of the target PUSCH includes:
determining, according to SSB information of a determined target SSB and the first corresponding information, the resource information of the target PUSCH.

Optionally, the corresponding information includes:
second corresponding information between RACH resource information and PUSCH resource information.

Optionally, the determining, according to the configuration information, the resource information of the target PUSCH includes:
obtaining resource information of a target RACH according to location information of a determined target SSB;
determining, according to the resource information of the target RACH and the second corresponding information, the resource information of the target PUSCH.

Optionally, the corresponding information includes: a time offset between SSB and PUSCH.

Optionally, the determining, according to the configuration information, the resource information of the target PUSCH includes:
determining, according to location information of a determined target SSB and the time offset, the resource information of the target PUSCH.

Optionally, the determining, according to the configuration information, the resource information of the target PUSCH includes:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information includes at least one of data resource bearer configuration information or logical channel configuration information.

Optionally, the determining the target SSB includes:
obtaining channel quality parameter information of candidate SSBs;
determining, according to the channel quality parameter information, the target SSB from at least one of the candidate SSBs;
wherein the channel quality parameter information includes at least one of following information:
   a reference signal received power (RSRP) value;
   a signal-to-noise and interference ratio (SINR) value;
   a smoothed value of SSB signal sampling points within a first duration;
   a fluctuation value of SSB signal sampling points within a second duration.

Optionally, the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

Optionally, the configuration information is carried in an RRC release message, an RRC recovery message, or an RRC reconfiguration message.

It is noted, the apparatus provided by the embodiment of the present disclosure may implement all method steps of the aforementioned method embodiments on the first terminal device side, and may achieve the same technical effects. To avoid redundancy, a detailed description of those parts same as the method embodiments and beneficial effects is omitted herein.

An embodiment of the present disclosure further provides an information processing apparatus, applied to a network side device. As shown in Fig. 16, the apparatus includes:
a first processing unit 161, configured to determine resource information of a target PUSCH, and transmit configuration information to a first terminal device;
a second receiving unit 162, configured to receive, according to the resource information, data transmitted on a corresponding PUSCH by the first terminal device in an RRC inactive state according to the configuration information;
wherein the configuration information includes corresponding information between information of SSB parameters and information of PUSCH parameters.

In the apparatus provided by the embodiment of the present disclosure, through determining resource information of a target PUSCH, and transmitting configuration information to a first terminal device; receiving, according to the resource information, data transmitted on a corresponding PUSCH by the first terminal device in an RRC inactive state according to the configuration information; wherein the configuration information includes corresponding information between information of SSB parameters and information of PUSCH parameters, resources of better quality can be selected for data transmission, thereby avoiding as far as possible the problem that data transmission in the inactive state is likely to fail.

The corresponding information includes at least one of following information: first corresponding information between SSB information and PUSCH resource information; second corresponding information between RACH resource information and PUSCH resource information; a time offset between SSB and PUSCH.

In the embodiment of the present disclosure, the configuration information may be carried in an RRC release message, an RRC recovery message, or an RRC reconfiguration message.

It is noted, the apparatus provided by the embodiment of the present disclosure may implement all method steps of the aforementioned method embodiments on the network side device side, and may achieve the same technical effects. To avoid redundancy, a detailed description of those parts same as the method embodiments and beneficial effects is omitted herein.

An embodiment of the present disclosure further provides an information processing apparatus, applied to a second terminal device. As shown in Fig. 17, the information processing apparatus includes:
a first obtaining unit 171, configured to obtain channel quality parameter information of candidate SSBs;
a third determination unit 172, configured to determine, according to the channel quality parameter information, a target SSB from at least one of the candidate SSBs;
wherein the channel quality parameter information includes at least one of following information:
   an RSRP value;
   an SINR value;
   a smoothed value of SSB signal sampling points within a first duration;
   a fluctuation value of SSB signal sampling points within a second duration.

In the information processing apparatus provided by the embodiment of the present disclosure, through obtaining channel quality parameter information of candidate SSBs; determining, according to the channel quality parameter information, a target SSB from at least one of the candidate SSBs; wherein the channel quality parameter information includes at least one of following information: an RSRP value; an SINR value; a smoothed value of SSB signal sampling points within a first duration; a fluctuation value of SSB signal sampling points within a second duration, resources of better quality can be selected for data transmission, thereby avoiding as far as possible the problem that data transmission in the inactive state is likely to fail.

The target SSB satisfies at least one of following conditions: the RSRP value of the target SSB is greater than or equal to a first RSRP threshold; the SINR value of the target SSB is greater than or equal to a first SINR threshold; the smoothed value of signal sampling points of the target SSB within the first duration is greater than or equal to a first smoothing threshold; the fluctuation value of signal sampling points of the target SSB within the second duration is less than or equal to a first fluctuation threshold.

The information processing apparatus further includes: a fourth determination unit, configured to, after the determining, according to the channel quality parameter information, the target SSB from at least one of the candidate SSBs, determine, according to the target SSB, resource information of a target PUSCH; a second transmitting unit, configured to transmit, according to the resource information, data on a corresponding PUSCH to a network side device, in case that there is data to be transmitted in an RRC inactive state.

It is noted, the apparatus provided by the embodiment of the present disclosure may implement all method steps of the aforementioned method embodiments on the second terminal device side, and may achieve the same technical effects. To avoid redundancy, a detailed description of those parts same as the method embodiments and beneficial effects is omitted herein.

Additionally, it is noted, the unit division in the embodiments of the present disclosure is merely exemplary, and the unit division is merely logical function division and may be other division in actual implementation. Additionally, the functional units in the various embodiments of the present disclosure may be integrated in one processing unit, or each unit may be physically alone, or two or more units may be integrated in one unit. The above integrated unit may be implemented in a form of hardware or in a form of hardware in conjunction with software function unit.

When the integrated unit is implemented in a form of the software function unit and sold or used as an independent product, the integrated unit may be stored in a computer-readable storage medium. Based on such an understanding, essential parts, or parts contributing to the related art, of the technical solution of the present disclosure, or part of or all of the technical solution may be implemented in a form of a software product. The computer software product is stored in a storage medium and includes several instructions adapted to be executed by a computer device (which may be a personal computer, server, network device or the like) to perform all or part of the steps of the methods according to the embodiments of the present disclosure. The storage medium includes a Universal Serial Bus (USB) disk, a removable hard disk, a Read-Only Memory (ROM), a Random Access Memory (RAM), a magnetic disk, an optical disc, and other medium capable of storing program code.

An embodiment of the present disclosure further provides a processor readable storage medium storing a computer program,
wherein the computer program is configured to be executed by a processor to implement the foregoing information processing method on the first terminal device side; or,
the computer program is configured to be executed by a processor to implement the foregoing information processing method on the network side device side; or,
the computer program is configured to be executed by a processor to implement the foregoing information processing method on the second terminal device side.

The processor readable storage medium may be any usable medium or data storage device accessible by the processor, and includes, but is not limited to: magnetic storage (e.g., floppy disk, hard disk, magnetic tape, magneto-optical disc (MO), and the like), optical storage (e.g., compact disc (CD), digital versatile disc (DVD), blue-ray disc (BD), high-definition versatile disc (HVD), and the like), and semiconductor storage (e.g., ROM, electrically programmable read-only-memory (EPROM), electrically erasable programmable read-only-memory (EEPROM), NAND FLASH, solid state drive (SSD), and the like).

It is noted, the processor readable storage medium provided by the embodiment of the present disclosure may implement all method steps of the aforementioned method embodiments on the first terminal device side, the network side device side or the second terminal device side, and may achieve the same technical effects. To avoid redundancy, a detailed description of those parts same as the method embodiments and beneficial effects is omitted herein.

It is appreciated by a person skilled in the art that, embodiments of the present disclosure may be implemented as a method, system or computer program product. Therefore, embodiments of the present disclosure may take the form of a complete hardware embodiment, complete software embodiment or combination of hardware and software. Moreover, embodiments of the present disclosure may take the form of a computer program product embodied as one or more computer readable storage media (including, but not limited to, a magnetic disk storage, optical storage or the like) storing therein computer usable program codes.

The embodiments of the present disclosure have been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing apparatus to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing terminal device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

It is clearly appreciated by those skilled in the art that, for ease and brevity of description, references may be made to corresponding processes in the foregoing method embodiments for specific working processes of the aforementioned system, apparatus and unit, a detailed description thereof is omitted herein.

In the several embodiments provided in the present application, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

From the foregoing description of the embodiments, a person skilled in the art will appreciate clearly that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in a form of a software product. The software product is stored in a storage medium (e.g., a read only memory (ROM)/ random access memory (RAM), a magnetic disk and an optical disc) and includes several instructions adapted to be executed by a terminal device (such as a handset, a computer, a server, an air conditioner or a network device) to perform the methods according to the embodiments of the present disclosure.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. Wherein the storage medium may be a magnetic disk, an optic disc, a ROM or a RAM, etc.

It may be understood that these embodiments described in this disclosure may be implemented by hardware, software, firmware, middleware, microcode or a combination thereof. For hardware implementation, a module, unit or subunit may be implemented in one or more ASICs, a digital signal processor (DSP), a DSP device (DSPD), a programmable logic device (PLD), a field-programmable gate array (FPGA), a general-purpose processor, a controller, a microcontroller, a microprocessor, other electronic unit configured to perform the functions in the present disclosure or a combination thereof.

For a software implementation, the techniques in some embodiments of the present disclosure may be implemented by modules (for example, processes or functions) performing the functions described in embodiments of the present disclosure. Software codes may be stored in a storage and executed by a processor. The storage may be implemented internal or external to a processor.

Obviously, modifications and improvements may be made by a person of ordinary skill in the art without departing from the spirit and scope of the present disclosure, and these modifications and improvements shall be encompassed by the present disclosure if the modifications and improvements fall within the scope of the claims of the present disclosure and equivalents thereof.

## Claims

1. An information processing method, performed by a first terminal device, comprising:
receiving configuration information transmitted by a network side device, wherein the configuration information comprises corresponding information between information of synchronization signal block (SSB) parameters and information of physical uplink shared channel (PUSCH) parameters;
determining resource information of a target PUSCH according to the configuration information.

2. The information processing method according to claim 1, further comprising:
in case that there is data to be transmitted in a radio resource control (RRC) inactive state, transmitting, according to the resource information, the data to the network side device on the corresponding PUSCH.

3. The information processing method according to claim 1, further comprising:
determining a target SSB;
wherein the determining the resource information of the target PUSCH according to the configuration information comprises:
determining the resource information of the target PUSCH according to the target SSB and the configuration information.

4. The information processing method according to any one of claims 1 to 3, wherein the corresponding information comprises:
first corresponding information between SSB information and PUSCH resource information.

5. The information processing method according to claim 4, wherein the determining the resource information of the target PUSCH according to the configuration information comprises:
determining, according to SSB information of a determined target SSB and the first corresponding information, the resource information of the target PUSCH.

6. The information processing method according to any one of claims 1 to 3, wherein the corresponding information comprises:
second corresponding information between random access channel (RACH) resource information and PUSCH resource information.

7. The information processing method according to claim 6, wherein the determining the resource information of the target PUSCH according to the configuration information comprises:
obtaining resource information of a target RACH according to location information of a determined target SSB;
determining, according to the resource information of the target RACH and the second corresponding information, the resource information of the target PUSCH.

8. The information processing method according to any one of claims 1 to 3, wherein the corresponding information comprises:
a time offset between SSB and PUSCH.

9. The information processing method according to claim 8, wherein the determining the resource information of the target PUSCH according to the configuration information comprises:
determining, according to location information of a determined target SSB and the time offset, the resource information of the target PUSCH.

10. The information processing method according to claim 1, wherein the determining the resource information of the target PUSCH according to the configuration information comprises:
obtaining at least one candidate location information according to the configuration information;
in case that a quantity of the candidate location information is one, using the candidate location information as the resource information of the target PUSCH;
in case that the quantity of the candidate location information is at least two, selecting, according to service type information of a current service, the resource information of the target PUSCH from the at least two candidate location information;
wherein the service type information comprises at least one of data resource bearer configuration information or logical channel configuration information.

11. The information processing method according to claim 3, wherein the determining the target SSB comprises:
obtaining channel quality parameter information of candidate SSBs;
determining, according to the channel quality parameter information, the target SSB from at least one of the candidate SSBs;
wherein the channel quality parameter information comprises at least one of following information:
a reference signal received power (RSRP) value;
a signal-to-noise and interference ratio (SINR) value;
a smoothed value of SSB signal sampling points within a first duration;
a fluctuation value of SSB signal sampling points within a second duration.

12. The information processing method according to claim 11, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

13. The information processing method according to claim 1, wherein the configuration information is carried in an RRC release message, an RRC recovery message, or an RRC reconfiguration message.

14. An information processing method, performed by a network side device, comprising:
determining resource information of a target PUSCH, and transmitting configuration information to a first terminal device;
receiving, according to the resource information, data transmitted on a corresponding PUSCH by the first terminal device in an RRC inactive state according to the configuration information;
wherein the configuration information comprises corresponding information between information of SSB parameters and information of PUSCH parameters.

15. The information processing method according to claim 14, wherein the corresponding information comprises at least one of following information:
first corresponding information between SSB information and PUSCH resource information;
second corresponding information between RACH resource information and PUSCH resource information;
a time offset between SSB and PUSCH.

16. The information processing method according to claim 14, wherein the configuration information is carried in an RRC release message, an RRC recovery message, or an RRC reconfiguration message.

17. An information processing method, performed by a second terminal device, comprising:
obtaining channel quality parameter information of candidate SSBs;
determining, according to the channel quality parameter information, a target SSB from at least one of the candidate SSBs;
wherein the channel quality parameter information comprises at least one of following information:
an RSRP value;
an SINR value;
a smoothed value of SSB signal sampling points within a first duration;
a fluctuation value of SSB signal sampling points within a second duration.

18. The information processing method according to claim 17, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

19. The information processing method according to claim 17, wherein, after the determining, according to the channel quality parameter information, the target SSB from at least one of the candidate SSBs, the method further comprises:
determining, according to the target SSB, resource information of a target PUSCH;
transmitting, according to the resource information, data on a corresponding PUSCH to a network side device, in case that there is data to be transmitted in an RRC inactive state.

20. A terminal device, the terminal device being a first terminal device, comprising a memory, a transceiver and a processor,
wherein the memory is configured to store a computer program, the transceiver is configured to transmit and receive data under control of the processor, and the processor is configured to read the computer program in the memory to implement following steps:
receiving, using the transceiver, configuration information transmitted by a network side device, wherein the configuration information comprises corresponding information between information of SSB parameters and information of PUSCH parameters;
determining, according to the configuration information, resource information of a target PUSCH.

21. The terminal device according to claim 20, wherein the processor is further configured to read the computer program in the memory to implement following step:
in case that there is data to be transmitted in an RRC inactive state, transmitting, using the transceiver and according to the resource information, the data to the network side device on the corresponding PUSCH.

22. The terminal device according to claim 20, wherein the processor is further configured to read the computer program in the memory to implement following step:
determining a target SSB;
wherein the determining, according to the configuration information, the resource information of the target PUSCH comprises:
determining, according to the target SSB and the configuration information, the resource information of the target PUSCH.

23. The terminal device according to any one of claims 20 to 22, wherein the corresponding information comprises:
first corresponding information between SSB information and PUSCH resource information.

24. The terminal device according to claim 23, wherein the determining, according to the configuration information, the resource information of the target PUSCH comprises:
determining, according to SSB information of a determined target SSB and the first corresponding information, the resource information of the target PUSCH.

25. The terminal device according to any one of claims 20 to 22, wherein the corresponding information comprises:
second corresponding information between RACH resource information and PUSCH resource information.

26. The terminal device according to claim 25, wherein the determining, according to the configuration information, the resource information of the target PUSCH comprises:
obtaining resource information of a target RACH according to location information of a determined target SSB;
determining, according to the resource information of the target RACH and the second corresponding information, the resource information of the target PUSCH.

27. The terminal device according to any one of claims 20 to 22, wherein the corresponding information comprises:
a time offset between SSB and PUSCH.

28. The terminal device according to claim 27, wherein the determining, according to the configuration information, the resource information of the target PUSCH comprises:
determining, according to location information of a determined target SSB and the time offset, the resource information of the target PUSCH.

29. The terminal device according to claim 20, wherein the determining, according to the configuration information, the resource information of the target PUSCH comprises:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information comprises at least one of data resource bearer configuration information or logical channel configuration information.

30. The terminal device according to claim 22, wherein the determining the target SSB comprises:
obtaining channel quality parameter information of candidate SSBs;
determining, according to the channel quality parameter information, the target SSB from at least one of the candidate SSBs;
wherein the channel quality parameter information comprises at least one of following information:
an RSRP value;
an SINR value;
a smoothed value of SSB signal sampling points within a first duration;
a fluctuation value of SSB signal sampling points within a second duration.

31. The terminal device according to claim 30, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

32. The terminal device according to claim 20, wherein the configuration information is carried in an RRC release message, an RRC recovery message, or an RRC reconfiguration message.

33. A network side device, comprising a memory, a transceiver and a processor,
wherein the memory is configured to store a computer program, the transceiver is configured to transmit and receive data under control of the processor, and the processor is configured to read the computer program in the memory to implement following steps:
determining resource information of a target PUSCH, and transmitting, using the transceiver, configuration information to a first terminal device;
receiving, using the transceiver and according to the resource information, data transmitted on a corresponding PUSCH by the first terminal device in an RRC inactive state according to the configuration information;
wherein the configuration information comprises corresponding information between information of SSB parameters and information of PUSCH parameters.

34. The network side device according to claim 33, wherein the corresponding information comprises at least one of following information:
first corresponding information between SSB information and PUSCH resource information;
second corresponding information between RACH resource information and PUSCH resource information;
a time offset between SSB and PUSCH.

35. The network side device according to claim 33, wherein the configuration information is carried in an RRC release message, an RRC recovery message, or an RRC reconfiguration message.

36. A terminal device, the terminal device being a second terminal device, comprising a memory, a transceiver and a processor,
wherein the memory is configured to store a computer program, the transceiver is configured to transmit and receive data under control of the processor, and the processor is configured to read the computer program in the memory to implement following steps:
obtaining channel quality parameter information of candidate SSBs;
determining, according to the channel quality parameter information, a target SSB from at least one of the candidate SSBs;
wherein the channel quality parameter information comprises at least one of following information:
an RSRP value;
an SINR value;
a smoothed value of SSB signal sampling points within a first duration;
a fluctuation value of SSB signal sampling points within a second duration.

37. The terminal device according to claim 36, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

38. The terminal device according to claim 36, wherein the processor is further configured to read the computer program in the memory to implement following steps:
after the determining, according to the channel quality parameter information, the target SSB from at least one of the candidate SSBs, determining, according to the target SSB, resource information of a target PUSCH;
transmitting, using the transceiver and according to the resource information, data on a corresponding PUSCH to a network side device, in case that there is data to be transmitted in an RRC inactive state.

39. An information processing apparatus, applied to a first terminal device, comprising:
a first receiving unit, configured to receive configuration information transmitted by a network side device, wherein the configuration information comprises corresponding information between information of SSB parameters and information of PUSCH parameters;
a first determination unit, configured to determine, according to the configuration information, resource information of a target PUSCH.

40. The information processing apparatus according to claim 39, further comprising:
a first transmitting unit, configured to, in case that there is data to be transmitted in a radio resource control (RRC) inactive state, transmit, according to the resource information, the data to the network side device on the corresponding PUSCH.

41. The information processing apparatus according to claim 39, further comprising:
a second determination unit, configured to determine a target SSB;
wherein the determining, according to the configuration information, the resource information of the target PUSCH comprises:
determining, according to the target SSB and the configuration information, the resource information of the target PUSCH.

42. The information processing apparatus according to any one of claims 39 to 41, wherein the corresponding information comprises:
first corresponding information between SSB information and PUSCH resource information.

43. The information processing apparatus according to claim 42, wherein the determining, according to the configuration information, the resource information of the target PUSCH comprises:
determining, according to SSB information of a determined target SSB and the first corresponding information, the resource information of the target PUSCH.

44. The information processing apparatus according to any one of claims 39 to 41, wherein the corresponding information comprises:
second corresponding information between RACH resource information and PUSCH resource information.

45. The information processing apparatus according to claim 44, wherein the determining, according to the configuration information, the resource information of the target PUSCH comprises:
obtaining resource information of a target RACH according to location information of a determined target SSB;
determining, according to the resource information of the target RACH and the second corresponding information, the resource information of the target PUSCH.

46. The information processing apparatus according to any one of claims 39 to 41, wherein the corresponding information comprises:
a time offset between SSB and PUSCH.

47. The information processing apparatus according to claim 46, wherein the determining, according to the configuration information, the resource information of the target PUSCH comprises:
determining, according to location information of a determined target SSB and the time offset, the resource information of the target PUSCH.

48. The information processing apparatus according to claim 39, wherein the determining, according to the configuration information, the resource information of the target PUSCH comprises:
obtaining at least one candidate location information according to the configuration information;
in case that a quantity of the at least one candidate location information is one, using the candidate location information as the resource information of the target PUSCH;
in case that the quantity of the at least one candidate location information is at least two, selecting, according to service type information of a current service, the resource information of the target PUSCH from the at least two candidate location information;
wherein the service type information comprises at least one of data resource bearer configuration information or logical channel configuration information.

49. The information processing apparatus according to claim 41, wherein the determining the target SSB comprises:
obtaining channel quality parameter information of candidate SSBs;
determining, according to the channel quality parameter information, the target SSB from at least one of the candidate SSBs;
wherein the channel quality parameter information comprises at least one of following information:
a reference signal received power (RSRP) value;
a signal-to-noise and interference ratio (SINR) value;
a smoothed value of SSB signal sampling points within a first duration;
a fluctuation value of SSB signal sampling points within a second duration.

50. The information processing apparatus according to claim 49, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

51. The information processing apparatus according to claim 39, wherein the configuration information is carried in an RRC release message, an RRC recovery message, or an RRC reconfiguration message.

52. An information processing apparatus, applied to a network side device, comprising:
a first processing unit, configured to determine resource information of a target PUSCH, and transmit configuration information to a first terminal device;
a second receiving unit, configured to receive, according to the resource information, data transmitted on a corresponding PUSCH by the first terminal device in an RRC inactive state according to the configuration information;
wherein the configuration information comprises corresponding information between information of SSB parameters and information of PUSCH parameters.

53. The information processing apparatus according to claim 52, wherein the corresponding information comprises at least one of following information:
first corresponding information between SSB information and PUSCH resource information;
second corresponding information between RACH resource information and PUSCH resource information;
a time offset between SSB and PUSCH.

54. The information processing apparatus according to claim 52, wherein the configuration information is carried in an RRC release message, an RRC recovery message, or an RRC reconfiguration message.

55. An information processing apparatus, applied to a second terminal device, comprising:
a first obtaining unit, configured to obtain channel quality parameter information of candidate SSBs;
a third determination unit, configured to determine, according to the channel quality parameter information, a target SSB from at least one of the candidate SSBs;
wherein the channel quality parameter information comprises at least one of following information:
an RSRP value;
an SINR value;
a smoothed value of SSB signal sampling points within a first duration;
a fluctuation value of SSB signal sampling points within a second duration.

56. The information processing method according to claim 55, wherein the target SSB satisfies at least one of following conditions:
the RSRP value of the target SSB is greater than or equal to a first RSRP threshold;
the SINR value of the target SSB is greater than or equal to a first SINR threshold;
the smoothed value of signal sampling points of the target SSB within the first duration is greater than or equal to a first smoothing threshold;
the fluctuation value of signal sampling points of the target SSB within the second duration is less than or equal to a first fluctuation threshold.

57. The information processing method according to claim 55, further comprising:
a fourth determination unit, configured to, after the determining, according to the channel quality parameter information, the target SSB from at least one of the candidate SSBs, determine, according to the target SSB, resource information of a target PUSCH;
a second transmitting unit, configured to transmit, according to the resource information, data on a corresponding PUSCH to a network side device, in case that there is data to be transmitted in an RRC inactive state.

58. A processor readable storage medium storing a computer program,
wherein the computer program is configured to be executed by a processor to implement the information processing method according to any one of claims of 1 to 13; or,
the computer program is configured to be executed by a processor to implement the information processing method according to any one of claims of 14 to 16; or,
the computer program is configured to be executed by a processor to implement the information processing method according to any one of claims of 17 to 19.
